# EUROPÄISCHE PATENTANMELDUNG

(11) **EP 0 868 033 A2**
(43) Veröffentlichungstag der Anmeldung: **30.09.1998**
(21) Anmeldenummer: 98103076.0
(22) Anmeldetag: 21.02.1998
(51) Int. Cl.: H04B 1/24

(54) **Vorrichtung zur Erkennung von betriebsbereiten mobilen Telefonapparaten**

(30) Priorität: 26.02.1997 DE 19707560
(71) Anmelder: Rudolph Logic Systems GmbH, 31157 Sarstedt (DE)
(72) Erfinder: Rudolph, Michael, 31157 Sarstedt (DE)

(57) **Zusammenfassung**

Mobile Funktelefone, sogenannte Handies, senden, ohne daß ihr Benutzer es bemerkt, auch im Stand-by-Betrieb Signale an die jeweiliege örtlichen Funkzelle ab. Diese Signale haben bereits wiederholt zu gefährlichen Störungen sicherheitsrelevanter Einrichtungen geführt, insbesondere während der Start- und Landephasen von Flugzeugen.

Um eine Abschaltung aller in einem Flugzeug betriebsbereit gehaltenen Handies kontrollieren zu können, schlägt die Erfindung eine Vorrichtung vor, die der passiven Kontrolle von Meldesignalen betriebsbereiter Handies dient. Die erfindungsgemäße Vorrichtung (50) weist einen aus einer Breitbandantenne (54), einem Filter (56) und Verstärker (58) bestehenden Eingangsteil (52) auf, der im Sinne eines Geradeausempfängers auf ein Frequenzband eines gewünschten Funknetzes abgestimmt ist. Die eigentliche Erkennung einer von einem betriebsbereiten Handy an das Netz übermittelten Meldung erfolgt in einem, mit einem Gleichrichter (62) ausgestatteten Empfangskreis (60) durch Auswertung der für Übertragungen in diesem Netz charakteristischen Pulswiederholungsfrequenz. Wird ein betriebsbereites Handy entdeckt, wird ein akustisches (68) und/oder optisches (70) Warnsignal ausgelöst.

## Beschreibung

Die Erfindung betrifft eine Vorrichtung zur Erkennung Von betriebsbereiten mobilen Telefonapparaten.

Seit mehreren Jahren sind derartige Mobil-Telefonapparate, insbesondere sogenannte Handies, bekannt und erfreuen sich zunehmender Beliebtheit und Verbreitung.

Handies sind mobile und handliche Funktelefone, die individuell kommunizieren können. Sie werden in Funknetzen (z. B. D1-, D2- und E-Netz) betrieben, die meist landesweit von verschiedenen Betreibern eingerichtet sind. Derzeit sind verschiedene Funk-Übertragungsstandards für solche Netze bekannt, beispielsweise der sogenannte GSM-Standard in Europa

Damit jedes Handy individuell kommunizieren kann, ist es mit einer eigenen Telefonnummer ausgestattet und ist, wenn betriebsbereit, in den Netzen erreichbar. Aufgrund der geforderten Handlichkeit (Baugröße und Gewicht ) dieser Handies ist ihre funktechnische Sende- und Empfangsleistung beschrankt. Handies werden daher nur innerhalb sogenannter Zellen oder Zonen betrieben, wobei diese Zonen bzw. Zellen gemeinsam ein Fuhknetz bilden. Um die Erreichbarkeit eines Handies zu gewährleisten, muß einem Netz bekannt sein, ob ein Handy betriebsbereit, d. h. empfangsbereit ist, und wo, also in welcher Zellen des Netzes es sich gerade befindet. Jedes Handy meldet seine Betriebsbereitschaft an das Netz, entweder mit dem Einschalten oder im sogenannten Stand-by-Betrieb in bestimmen zeitlichen Abstanden oder nach einem Standortwechsel in eine andere Zelle. Die Funkfrequenzen, mit denen sich ein Handy beim Netz meldet und mit denen die Telefon-Kommunikation abläuft, sind unterschiedlich und hängen von der jeweiligen Zelle ab, in der es sich gerade befindet. Die Meldesignale (wie auch die telefoniesignale) sind üblicherweise im Zeitmultiplexverfahren ausgestrahlte kurze Pulspakete, wobei die periodische Wiederholrate (Pulswiederholungsfrequenz) abhängig ist vom Übertragungsstandard. Beim GSM-Standard beispielsweise beträgt diese Pulswiederholungsfrequenz 217 Hz.

Informationen über den Standort von betriebsbereiten Handies werden im Netz gespeichert und dienen dazu, ein Handy bei einem Anruf zu lokalisieren, indem der Anruf an die Zelle durchgestellt wird, in der sich das angerufene Handy befindet. Jede Zelle eines Netzes ist daher mit wenigstens einer besonderen Sende- und Empfangsstation, einer sogenannten Basisstation, ausgerüstet, die die Anrufe eines sich in dieser Zelle befindlichen Handies entgegennimmt und weiterleitet und/oder Anrufe an bzw. von einem Handy im Zellenbereich vermittelt bzw. durchstellt. Wie gesagt, senden Handies nicht nur Signale während eines Telefonates aus, sondern auch im Stand-by-Betrieb, und zwar ohne daß dies vom Benutzer ausgelöst werden muß oder er sonst davon erfährt.

Es ist nun bekannt geworden, daß diese von einem Handy ausgestrahlten, dem Funknetz übermittelten hochfrequenten Meldesignale Störungen (EMI) von empfindlichen technischen Geräten herbeiführen können. Ein besonderes Problem entsteht dadurch, daß die Handies als mobile Geräte ungewollt nahe an die besagten empfindlichen technischen Geräten gelangen können und, ohne das der Benutzer davon erfährt, Störungen verursachen. Gerade sicherheitsrelevante Einrichtungen und Instrumente, wie z B. Radar-, Navigations- und Gebäude- bzw. Objektschutz-Einrichtungen können in ihrer Funktion nachhaltig beeinträchtigt werden.

Es hat sich weiterhin gezeigt, daß durch die Abstrahlcharakteristika von Handies verschiedene Geräte und Instrumente von Flugzeugen beeinflußt werden können, was zu einer direkten Beeinträchtigung der Sicherheit im Luftverkehr führen kann. Aufgrund flugtechnischer Vorgaben und der langen Lebensdauer einer Flugzeuggeneration lassen sich Flugzeug-Instrumente nicht so einfach gegenüber den Störsignalen von Handies abschirmen. So sind zum Beispiel noch Flugzeuge und deren Instrumente im Einsatz, die bereits vor Einführung von Handy-Funktelefonen in Dienst genommen wurden. Durch die zunehmende Verbreitung von Handies und den damit verbundenen zunehmenden internationalen Gebrauch von Handies auf Flughäfen und im Flugzeug, besonders während deren Start- und Landephase, nimmt die Gefahr von Beeinflussung wichtiger flugtechnischer und sicherheitsrelevanter Instrumente und den davon gelieferten Daten zu.

Ein Einsammeln der von den Flugpassagieren mitgeführten Handies beispielsweise beim Einchecken der Passagiere und ein Zurückgeben der Handies nach dem Flug wäre nur unter erheblichem zusätzlichen Personalaufwand und damit einhergehender Verzögerung der Abfertigung der Passagiere möglich. Die gebräuchlichste Maßnahme der Fluggesellschaften besteht darin eine Aufforderung an die Passagiere zu richten, den möglicherweise den Luftverkehr gefährdenden Gebrauch von Handies zu unterlassen. Eine weitergehende Kontrolle, ob sich alle Passagiere an diese Bitte halten, wäre jedoch nur durch Beobachten aller Passagiere möglich, wobei diese Maßnahme allerdings keine wirkliche Kontrolle darstellt. Gerade während der Start- und Landephasen, wenn die meistens Passagiere noch ein letztes Gespräch zum Reiseantritt führen möchten, bzw. sich beim Landeanflug bereits bei ihren Angehörigen melden, muß - aus Sicherheitsgründen - auch das Kabinenpersonal angeschnallt auf seinen Sitzen verbleiben. Daher hat das Kabinenpersonal nur wenig Sichtkontakt zu den Passagieren, eine Sichtkontrolle ist nahezu ausgeschlossen. Insgesamt fehlt also eine sichere Möglichkeit, betriebsbereit gehaltene bzw. betriebene Handies zu entdecken, um dann gezielt deren Ausschaltung zu verlangen.

Es ist zwar auch bekannt, Funksignale mit Scannern oder Spektrum-Analyser zu empfangen und zu analysieren, jedoch eignen sich diese Geräte nicht dazu, betriebsbereite Handies zu entdecken. Handies mit Scanner bzw. Spektrum-Analysern zu entdecken gelänge nur, wenn ihre Empfangsfrequenz zu exakt dem Sendezeitpunkt, wo sich ein betriebsbereites Handy in seinem Netz bzw. der zuständigen Zelle meldete, auf exakt die Sendefrequenz (Standortabhängig) des Handies abgestimmt wären. Da aber beide Geräte, Scanner wie Spektrum-Analyser zyklisch arbeiten, wäre eine Frequenzübereinstimmung rein zufällig. Außerdem lassen die Spezifikationen des GSM-Übertragungsstandards ein sogenanntes Slow Frequency Hopping für Handies zu. Damit kann bei Überlastung einer Funkzellenfrequenz durch zu viele Handy-Benutzer oder bei sonstigen Störungen der Funkfrequenz auf eine benachbarte Funkfrequenz, in Abstimmung mit der jeweiligen Basisstation, gewechselt werden. Einem Abscannen der in Frage kommenden Frequenzbereiche mittels Scanner oder Spektrum-Analyser, um so betriebsbereite Handies zu entdecken, kommt nur eine sehr geringe Trefferwahrscheinlichkeit zu.

Der Erfindung liegt daher die Aufgabe zugrunde, eine Vorrichtung zu schaffen, mit der betriebsbereite Handies zweifelsfrei festgestellt werden können, um bei möglicherweise störanfälligen Einrichtungen eine Abschaltung des bzw. der Handies zu erwirken.

Diese Aufgabe wird erfindungsgemäß mittels einer Vorrichtung gelöst, die wenigstens einen auf einen Netz-Frequenzbereich abgestimmten Eingangsteil und einen nachgeschalteten Frequenz-Auswerteteil sowie eine, im Falle von entdeckten betriebsbereiten Telefonen betätigbare Warnvorrichtung aufweist.

Der besondere Vorteile der erfindungsgemäßen Vorrichtung ist darin zu sehen, daß zu jedem Zeitpunkt gleichzeitig auf unterschiedlichen Frequenzen, d. h. Standort-ungebunden, die Meldesignale der Handies detektiert werden können In weiterer, vorteilhafter Ausgestaltung der Erfindung wird dazu mittels eines Eingangsteils in Form eines Geradeausempfängers die jeweils gewünschte, gesamte Breite der sogenannten Uplink-Frequenzen überwacht. Die eigentliche Erkennung eines Handy-Signals erfolgt durch die Auswertung der für die Übertragung charakteristischen Pulswiederholungsfrequenz.

Das erfindungsgemäße Gerät kann darüber hinaus Klein und handlich ausgeführt werden und ist dann flexibel einsetzbar. Aufgrund der schaltungstechnischen Gegebenheiten ist die Erfindung frei von eigener hochfrequenter Abstrahlung und beeinflußt daher selbst keine anderen Geräte.

In bevorzugter Ausführungsform ist das erfindungsgemäße Gerät in der Lage, Handies aller gängigen internationalen Netze zu erkennen und kann somit als feste Installation in einem Flugzeug oder als mobile Ausrüstung für das Kabinenpersonal ohne weitere Modifikationen weltweit zum Einsatz kommen.

Neben seiner Verwendung im Luftverkehr eignet sich die Erfindung für all jene Einsatzbereiche, in denen die Benutzung von Handies untersagt ist wie z. B. in Krankenhäuser, Haftanstalten, etc.

Nachfolgend wird die Erfindung unter Zuhilfenahme von Zeichnungen und anhand eines bevorzugten Ausführungsbeispiels der Erfindung genauer erläutert und beschrieben. Dabei zeigen:
Figur 1 eine schematische Darstellung der erfindungsgemäßen Vorrichtung mit zwei für unterschiedliche Funknetze ausgelegte Eingangskreise;
Figur 2 eine schematische Darstellung der erfindungsgemäßen Vorrichtung mit einem einzelnen Eingangskreis zur Überwachung eines anderen Funknetzes sowie mit einer zweifachen Alarm;
Figur 3 eine schematische Darstellung einer zusätzlichen Vorrichtung, die dazu dient betriebsbereite Handies im Stand-by-Betrieb zur Abgabe von Meldesignalen zu veranlassen.

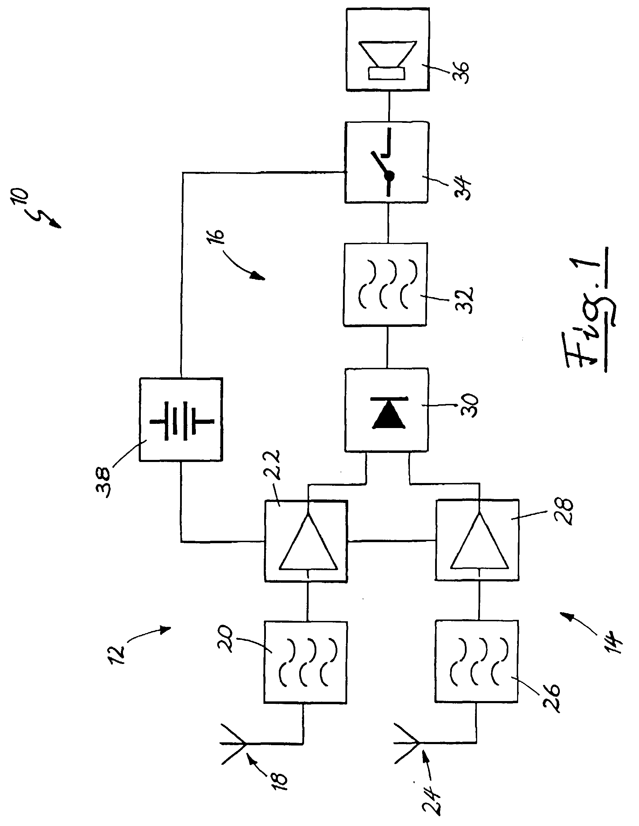

In Figur 1 ist die erfindungsgemäßen Vorrichtung 10 zum Erkennen von betriebsbereiten mobilen Telefon-Apparaten in einem Blockschaltbild dargestellt. Die Vorrichtung 10 umfaßt zwei Eingangskreise 12 und 14, die jeweils, in Form eines Geradeausempfängers, zur breitbandigen Überwachung der Uplink-Frequenzen von einem Handy zum Netz dienen. Beide Eingangskreise 12 und 14 werden in einem anschließenden Auswertekreis 16 bearbeitet.

Der erste Eingangskreis 12 besteht in einer ersten Ausführungsform aus einer Breitbandantenne 18, einem Frequenzfilter 20 und einem HF-Verstärker 22. Antenne 18, Filter 20 und Verstärker 22 sind so aufeinander abgestimmt, daß sie der Überwachung eines Frequenzbandes eines Funknetzes dienen, beispielsweise eines Frequenzbandes von 1710 bis 1900 MHz, wie es für das in Deutschland gebräuchliche E-Funknetz verwendet wird.

Der zweite Eingangskreis 14 besteht in der beschriebenen ersten Ausführungsform ebenfalls aus einer Breitbandantenne 24, einem Frequenzfilter 26 und einem HF-Verstärker 28. Allerdings sind hier Antenne 24, Filter 26 und Verstärker 28 auf ein anderes Frequenz-bandes eines anderen Funknetzes abgestimmt: hier beispielsweise eines Frequenzbandes von 880 bis 915 MHz, wie es für das in Deutschland gebräuchliche D-Funknetz (derzeit D1 und D2) verwendet wird. Durch die erfindungsgemäße Verwendung eines sehr steilflankigen Filters 20, 26, beispielsweise eines sogenannten SAW-Filters oder eines L-C-Filters, lassen sich die zu überwachenden Uplink-Meldungen der Handies an das Netz von eventuell vom Netz an die Handies gerichteten leistungsstärkeren Meldungen, den sogenannten Downlinks, unterscheiden. Um die Steilflankigkeit der Filterung zu verbessern, können auch mehrere Filterstufen hintereinander geschaltet werden.

Die eigentliche Erkennung einer von einem betriebsbereiten Handy an das Netz übermittelten Meldung erfolgt durch Auswertung der für Übertragungen in diesem Netz charakteristischen, vom Übertragungsstandard (z.B. GSM) vorgegebenen Pulswieder-holungsfrequenz. Beim GSM-Standard beispielsweise liegt diese Pulswiederholungs-frequenz bei 217 Hz. Zum Erkennen einer solchen Pulswiederholungsfrequenz, die von einem betriebsbereiten Handy verwendet wird, ist der Empfangskreis mit einem Gleichrichter 30 ausgestattet, sowie einem nachgeschalteten Filter 32.

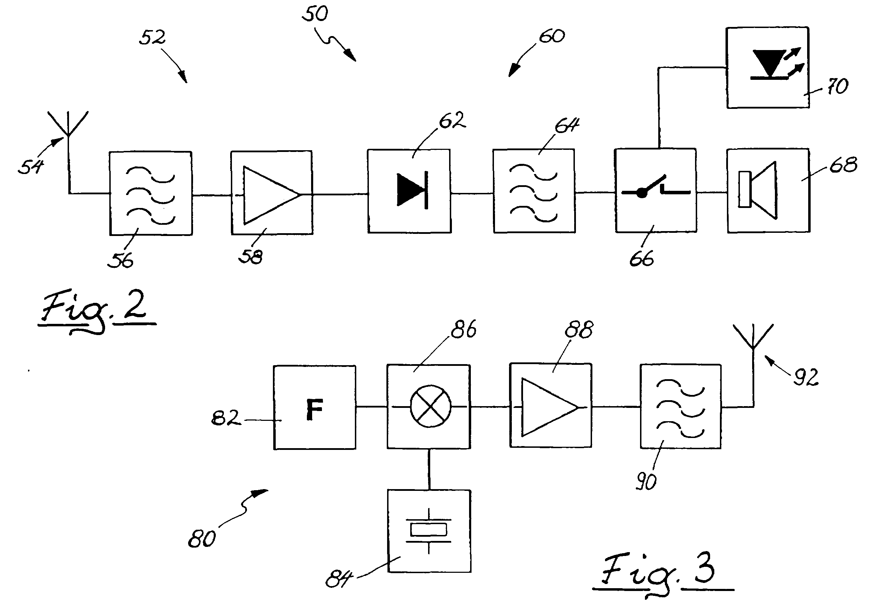

Vorzugsweise geschieht die Gleichrichtung des bzw. der aus den Eingangskreisen 12 und 14 kommenden Signale mit Hilfe einer Diode 30. Diese Ausführung hat den Vorteil, daß trotz einfacher Konstruktion eine hinreichende Wirksamkeit bietet. In einem Filter 32 werden dann schließlich alle Signale mit jener Frequenz herausgefiltert, die der gewählten Pulswiederholungsfrequenz entspricht. Bei Entdeckung eines solchen Signals das ein betriebsbereites Handy anzeigt, wird über einen Schalter 34 ein Alarmgeber angesteuert, hier mit 36 bezeichnet, und dort ein Warnsignal ausgelöst. Bei dem in Figur 1 dargestellten Alarmgeber 36 handelt es sich um einen akustischen Signalgeber. Andere Signalgeber sind selbstverständlich möglich, wie später im Beschreibungstext im Zusammenhang mit der Figurenbeschreibung zu Figur 2 noch erklärt wird.

Selbstverständlich und ohne Einschränkung der Erfindung können auch andere breitbandig wirksame Eingangskreise für andere zu überwachende Funknetze verwendet werden, die entweder zusätzlich zu den in Figur 1 dargestellten Eingangskreisen für das E- und D-Netz auf den Auswertekreis 16 geschaltet werden. Das Gleiche gilt auch für den in Figur 1 dargestellten Auswertekreis 16. Sollen Handies überwacht werden, die nach einem anderen als dem unter der Figurenbeschreibung zu Figur 1 beschriebene Übertragungsstandard GSM betrieben werden, so ist eine entsprechende Auslegung des Auswertekreises auf einfache Weise möglich.

Eine Energiequelle, die die aktiven Elemente der erfindungsgemaßen Vorrichtung 10 mit elektrischer Energie versorgt, ist mit 38 bezeichnet. Im Falle einer tragbaren Vorrichtung 10 kann die Energiequelle 38, wie in Figur 1 dargestellt, aus wenigstens einer Batterie oder wenigstens einem Akku bestehen. Im Falle einer stationären Montage der Erfindung 10 ist auch eine andere Form der elektrischen Energieversorgung ohne Einschränkung der Erfindung denkbar.

In Figur 2 ist eine zweite Ausführungsform der erfindungsgemäßen Vorrichtung 50 dargestellt, bei der ein einzelner Eingangskreis 52, bestehend aus einer Breitbandantenne 54, einem Filter 56 und einem HF-Verstärker 58 verwendet wird. Eine solche quasi vereinfachte Eingangsbeschaltung der Vorrichtung 50 bietet sich immer dann an, wenn die erfindungsgemäße Vorrichtung 50 ausschließlich im Bereich eines einzelnen Funknetzes eingesetzt werden soll. Neben den bereits aus dem Gegenstand der Figur 1 bekannten Elementen des Auswertekreises, hier mit 60 bezeichnet, wie einem Gleichrichter 62, und einem auf eine gewählte Pulswiederholungsfrequenz abgestimmter Filter 64, wird hier ein akustischer, beispielsweise ein Summer, und ein zusätzlicher optischer Alarmsignalgeber 70, beispielsweise eine Leuchtdiode, verwendet.

Aus gründen der Vereinfachung ist bei der in Figur 2 dargestellten erfindungsgemäßen Vorrichtung 50 die Energieversorgung (siehe dazu Figur 1) nicht abgebildet.

Für verschiedene Anwendungsfälle der Erfindung ist es auch denkbar, daß die in den Vorrichtungen 10; 50 erzeugten Warnsignale in ein weiteres hier nicht dargestelltes Gerät weiterzuleiten. Dies hat den Vorteil, beispielsweise automatische Warndurchsagen oder andere Hinweise bei Entdeckung unerwünscht betriebsbereit gehaltener Handies auslösen zu können oder zusätzliche Warn- bzw. Signalgeräte steuern zu können. Darüber hinaus ließen sich auf diese Weise auch die von der Erfindung 10; 50 erzeugten Warnsignale mit beispielsweise Zeit- und Ortsangaben oder Ähnlichem speichern und gegebenenfalls statistisch auswerten.

Figur 3 zeigt in schematischer Darstellung ein zusätzliches Gerät 80, das sich besonders für einen Einsatz mit der Erfindung eignet. Mit diesem Gerät 80 lassen sich Signale an betriebsbereit gehaltene Handies aussenden, die diese wiederum zur Abgabe von oben beschriebenen Meldesignalen bei der jeweiligen Funkzelle veranlassen. Das Gerät 80 umfaßt zu diesem Zweck einen Frequenz-/Signalerzeuger 82 zum Erzeugen einer variablen Funksignale. Diese Frequenz wird mit einer, in einem Oszillator 84 erzeugten festen Frequenz (beispielsweise mit einem vorgewählten Quarz) mittels eines Mischers 86 gemischt. Dieses Signal wird dann in einem Verstärker 88 derart verstärkt, daß es nach dem Passieren eines Filters 90 über eine Antenne 92 an alle im Sendeumfeld befindlichen Handies gesendet werden kann. Eine für die elektrische Versorgung erforderliche Energiequelle ist hinreichend bekannt und aus Gründen der Vereinfachung hier nicht dargestellt. Die Funktionsweise des in Figur 3 abgebildeten Gerätes 80 kann wie folgt beschrieben werden:

Mit Hilfe eines im Frequenz/Signalerzeuger 82 enthaltenen Microcontrollers können Puls-Datenpaket-artige Signale erzeugt werden, die denen einer Basisstation einer Funknetz-Zelle entsprechen. Für die im Sendebereich des Gerätes 80 befindlichen betriebsbereiten Handies kann auf diese Weise ein (neues) Netz simuliert werden, was sie dazu veranlaßt sich in eben diesem simulierten Netz anzumelden. Die für diese Anmeldesignale von den Handies ausgesandten Signale lassen sich mit der in den oben beschriebenen erfindungsgemäßen Vorrichtungen 10; 50 (siehe Figuren 1 und 2) sofort detektieren.

Es ist auch denkbar durch im Gerät 80 erzeugte und gesendete Signale bzw. Datenfolgen Handies klingeln zu lassen und/oder auf deren Display einen besonderen Text (beispielsweise einen Warnhinweis) anzeigen zu lassen. Allerdings muß festgestellt werden, daß durch Sendesignale des Gerätes 80 keine ferngesteuerte Abschaltung betriebsbereiter Handies möglich ist.

## Patentansprüche

1. Vorrichtung (10) zur Erkennung von betriebsbereiten mobilen Telefon-Apparaten, dadurch gekennzeichnet, daß die Vorrichtung (10) wenigstens einen auf einen Netz-Frequenzbereich abgestimmten Eingangsteil (12) und einen nachgeschalteten Frequenz-Auswerteteil (16) sowie eine, im Falle von entdeckten betriebsbereiten Telefonen betätigbare Warnvorrichtung (36) aufweist.

2. Vorrichtung (10) nach Anspruch 1, dadurch gekennzeichnet, daß der Eingangsteil (12) ein mit einer Antenne (18) verbundener Geradeausempfänger ist, der zur Überwachung eines Uplink-Frequenzbereiches eines Funknetzes dient.

3. Vorrichtung (10) nach einem der Ansprüche 1 oder 2, dadurch gekennzeichnet, daß mehrere, parallele Eingangsteile (12, 14) vorhanden sind, die jeweils auf einen Übertragungsstandard abgestimmt sind.

4. Vorrichtung (10) nach einem der vorgehenden Ansprüche, dadurch gekennzeichnet, daß der oder wenigstens einer der Eingangteile (12, 14) aus einer Breitbandantenne (18, 24), einem Bandfilter (20, 26) und einem Verstärker( 22, 28) besteht.

5. Vorrichtung (10) nach einem der vorgehenden Ansprüche, dadurch gekennzeichnet, daß im nachgeschalteten Frequenz-Auswerteteil (16), die von wenigstens einem Eingangsteil (12, 14) kommenden Signale gleichgerichtet (30) und auf die Multiplexfrequenz des gewählten Übertragungsstandards hin ausgewertet werden.

6. Vorrichtung (10) nach Anspruch 5, dadurch gekennzeichnet, daß die Warnvorrichtung (36) bei einem auf der Multiplexfrequenz sendenden Handy einen akustischen Alarm abgibt.

7. Vorrichtung nach einem der vorgehenden Ansprüche, dadurch gekennzeichnet, daß die Warnvorrichtung einen akustischen (68) und optischen Alarm (70) abgibt.

8. Vorrichtung (10) nach einem der vorgehenden Ansprüche, dadurch gekennzeichnet, daß die Warnsignale einem weiteren externen Gerät zugeführt werden
